# EUROPEAN PATENT APPLICATION

(11) **EP 3 888 977 A1**
(43) Date of publication of application: **06.10.2021**
(21) Application number: 19889363.8
(22) Date of filing: 01.11.2019
(51) Int. Cl.: B60R 1/00, H04R 3/00, G08G 1/16, H04N 5/77, H04N 5/915, H04N 7/18

(54) **IMAGE PROCESSING DEVICE, IMAGING DEVICE, MOVING BODY AND IMAGE PROCESSING METHOD**

(30) Priority: 28.11.2018 JP 2018222847
(71) Applicant: Kyocera Corporation, Kyoto-shi, Kyoto 612-8501 (JP)
(72) Inventor: OHWADA Yoshitake, Kyoto-shi, Kyoto 612-8501 (JP); FUKUSHIMA Hisanori, Kyoto-shi, Kyoto 612-8501 (JP); MOTEKI Ryosuke, Kyoto-shi, Kyoto 612-8501 (JP)
(74) Representative: Viering, Jentschura & Partner mbB Patent- und Rechtsanwälte
(86) International application number: PCT/JP2019/043135
(87) International publication number: WO 2020/110611

(57) **Abstract**

An image processing apparatus includes a communication interface and a processor. The processor performs an action determination process to detect an image of another moveable body from a surrounding image of a moveable body and determine an action of the moveable body based on a state of the other moveable body. The communication interface outputs information instructing to perform the action to the moveable body. As the action determination process, the processor determines a first action of the moveable body based on a first state of the other moveable body detected from the surrounding image and outputs information instructing to perform the first action to the moveable body. The processor determines a second action of the moveable body when judging that the other moveable body is driving recklessly based on a second state of the other moveable body detected from a surrounding image captured after the first action.

## Description

### CROSS-REFERENCE TO RELATED APPLICATION

The present application claims priority to Japanese Patent Application No. 2018-222847 filed on November 28, 2018, the entire contents of which are incorporated herein by reference.

### TECHNICAL FIELD

The present disclosure relates to an image processing apparatus, an imaging apparatus, a moveable body, and an image processing method.

### BACKGROUND

A driving support apparatus that provides the detection result of an on-vehicle camera to a driver is known. For example, see patent literature (PTL) 1.

### CITATION LIST

### Patent Literature

PTL 1: JP 2008-243065 A

### SUMMARY

An image processing apparatus according to an embodiment of the present disclosure includes a processor and an output interface. The processor performs an action determination process to detect the state of another moveable body from a surrounding image capturing the surroundings of a moveable body and determine an action of the moveable body based on the detected state of the other moveable body. The output interface outputs, to the moveable body, information instructing to perform the action of the moveable body determined by the processor. The processor performs the action determination process by determining a first action of the moveable body based on a first state of the other moveable body detected from the surrounding image and outputting information instructing to perform the determined first action to the moveable body via the output interface. The processor then determines a second action of the moveable body when judging that the other moveable body is driving recklessly based on a second state of the other moveable body detected from a surrounding image captured after the first action by the moveable body.

An imaging apparatus according to an embodiment of the present disclosure includes the above-described image processing apparatus and an input interface configured to acquire the surrounding image.

A moveable body according to an embodiment of the present disclosure includes the above-described imaging apparatus.

In an image processing method according to an embodiment of the present disclosure, an image processing apparatus detects a state of another moveable body detected from a surrounding image capturing surroundings of a moveable body and determines a first action of the moveable body based on a first state of the other moveable body. In the image processing method, the image processing apparatus outputs information instructing to perform the determined first action to the moveable body. In the image processing method, the image processing apparatus determines a second action of the moveable body when judging that the other moveable body is driving aggressively based on a second state of the other moveable body detected from a surrounding image captured after the first action by the moveable body.

### BRIEF DESCRIPTION OF THE DRAWINGS

In the accompanying drawings:
FIG. 1 illustrates an example configuration of an image processing apparatus according to an embodiment of the present disclosure;
FIG. 2A illustrates an example of actions of a vehicle when another vehicle is performing first aggressive driving with respect to the vehicle;
FIG. 2B illustrates an example of actions of a vehicle when another vehicle is performing first aggressive driving with respect to the vehicle;
FIG. 2C illustrates an example of actions of a vehicle when another vehicle is performing first aggressive driving with respect to the vehicle;
FIG. 3A illustrates an example of actions of a vehicle when another vehicle is performing second aggressive driving with respect to the vehicle;
FIG. 3B illustrates an example of actions of a vehicle when another vehicle is performing second aggressive driving with respect to the vehicle;
FIG. 3C illustrates an example of actions of a vehicle when another vehicle is performing second aggressive driving with respect to the vehicle;
FIG. 4A illustrates an example of actions of a vehicle when another vehicle is performing third aggressive driving with respect to the vehicle;
FIG. 4B illustrates an example of actions of a vehicle when another vehicle is performing third aggressive driving with respect to the vehicle;
FIG. 4C illustrates an example of actions of a vehicle when another vehicle is performing third aggressive driving with respect to the vehicle;
FIG. 5A illustrates an example of actions of a vehicle when another vehicle is performing fourth aggressive driving with respect to the vehicle;
FIG. 5B illustrates an example of actions of a vehicle when another vehicle is performing fourth aggressive driving with respect to the vehicle;
FIG. 5C illustrates an example of actions of a vehicle when another vehicle is performing fourth aggressive driving with respect to the vehicle;
FIG. 6A illustrates an example of actions of a vehicle when another vehicle is performing fifth aggressive driving with respect to the vehicle;
FIG. 6B illustrates an example of actions of a vehicle when another vehicle is performing fifth aggressive driving with respect to the vehicle;
FIG. 6C illustrates an example of actions of a vehicle when another vehicle is performing fifth aggressive driving with respect to the vehicle;
FIG. 7A illustrates an example of actions of a vehicle when another vehicle is performing sixth aggressive driving with respect to the vehicle;
FIG. 7B illustrates an example of actions of a vehicle when another vehicle is performing sixth aggressive driving with respect to the vehicle;
FIG. 7C illustrates an example of actions of a vehicle when another vehicle is performing sixth aggressive driving with respect to the vehicle;
FIG. 8 is a flowchart illustrating an example of an image processing method according to an embodiment of the present disclosure;
FIG. 9 is an example state transition diagram;
FIG. 10 is a flowchart illustrating an example of a first aggressive driving judgment process in an image processing method according to an embodiment of the present disclosure;
FIG. 11 is a flowchart illustrating an example of a second aggressive driving judgment process in an image processing method according to an embodiment of the present disclosure;
FIG. 12 is a flowchart illustrating an example of a third aggressive driving judgment process in an image processing method according to an embodiment of the present disclosure;
FIG. 13 is a flowchart illustrating an example of a fourth aggressive driving judgment process in an image processing method according to an embodiment of the present disclosure;
FIG. 14 is a flowchart illustrating an example of a fifth aggressive driving judgment process in an image processing method according to an embodiment of the present disclosure; and
FIG. 15 is a flowchart illustrating an example of a sixth aggressive driving judgment process in an image processing method according to an embodiment of the present disclosure;

### DETAILED DESCRIPTION

Truly necessary information may be provided to a driver by using an on-vehicle camera to detect the state of another vehicle, the state of a pedestrian, the state of an entry road, or the like, and notifying the driver only when a right turn is possible or impossible. In this case, a configuration that simply detects only the state of the other vehicle is problematic due to being incapable of accurately judging whether the other vehicle is driving aggressively with respect to the vehicle, for example. In a society where self-driving vehicles are becoming more popular, misjudgment of aggressive driving could impede the smooth flow of traffic. Demand exists for facilitating traffic.

Embodiments of the present disclosure are described below through examples with reference to the drawings. Identical reference signs in the drawings indicate identical or similar constituent elements.

In the present disclosure, six types of examples of "aggressive driving" are described. "Aggressive driving" is an action whereby, for some reason or objective, the driver of another vehicle provokes the driver of a certain vehicle, impeding the smooth flow of traffic. First aggressive driving is defined as "driving whereby another vehicle closes the distance from a vehicle". Second aggressive driving is defined as "driving whereby another vehicle uses the horn to intimidate a vehicle". Third aggressive driving is defined as "driving whereby another vehicle zig-zags behind a vehicle". Fourth aggressive driving is defined as "driving whereby another vehicle flashes its headlights behind a vehicle". Fifth aggressive driving is defined as "driving whereby another vehicle tailgates or follows a vehicle". Sixth aggressive driving is defined as "driving whereby another vehicle approaches a vehicle from the side".

### <Configuration of Image Processing Apparatus>

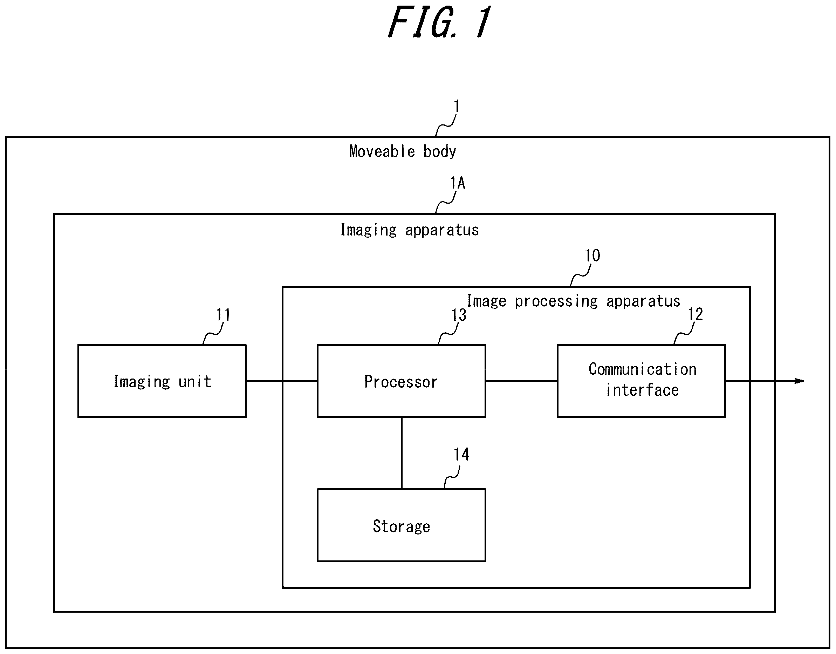

With reference to FIG. 1, the configuration of an image processing apparatus 10 according to the present embodiment is now described. FIG. 1 illustrates an example of the configuration of the image processing apparatus 10 according to the present embodiment.

As illustrated in FIG. 1, the image processing apparatus 10 is mounted in a moveable body 1 (for example, a vehicle) and detects the state of another moveable body (for example, another vehicle) from a surrounding image capturing the surroundings of the moveable body 1. The image processing apparatus 10 determines the action to be taken by the moveable body 1 based on the detected state of the other vehicle. The image processing apparatus 10 outputs information with an instruction for the action to be taken by the moveable body 1 to the moveable body 1. In addition to an imaging apparatus 1A, the moveable body 1 may, for example, include a vehicle speed sensor, a ranging sensor, a microphone, radar, sonar, lidar, and the like.

The moveable body 1 is, for example, a vehicle with an autonomous driving function. In the present embodiment, "autonomous driving" includes automation of a portion or all of user operations for driving a vehicle. For example, autonomous driving may include levels 1 through 5 as defined by the Society of Automotive Engineers (SAE). The moveable body 1 is described below as including a fully autonomous driving function at level 4 or above as defined by the SAE.

The image processing apparatus 10 includes a communication interface 12 as an output interface, a processor 13, and a storage 14. The imaging apparatus 1A, which includes the image processing apparatus 10 and an imaging unit 11 as an input interface, is mounted in the moveable body 1.

The imaging unit 11 acquires a surrounding image capturing the surroundings of the moveable body 1 and outputs the acquired surrounding image to the processor 13. The imaging unit 11 is, for example, an on-vehicle camera mounted in the moveable body 1. A plurality of imaging units 11 may be mounted in the moveable body 1. In the case of four on-vehicle cameras being mounted in the moveable body 1, the first on-vehicle camera, for example, is disposed at a position from which the camera can capture the surrounding area in front of the moveable body 1 and at least a portion of the front surface of the moveable body 1. The second on-vehicle camera, for example, is disposed at a position from which the camera can capture the surrounding area behind the moveable body 1 and at least a portion of the back surface of the moveable body 1. The third on-vehicle camera, for example, is disposed at a position from which the camera can capture the surrounding area on the left side of the moveable body 1 and at least a portion of the left surface of the moveable body 1. The fourth on-vehicle camera, for example, is disposed at a position from which the camera can capture the surrounding area on the right side of the moveable body 1 and at least a portion of the right surface of the moveable body 1. By being disposed in this way, the imaging units 11 can capture images of the surrounding area in four directions from the moveable body 1.

The imaging unit 11 includes at least an imaging optical system and an image sensor.

For example, the imaging optical system includes one or more lenses, apertures, and the like. The lens included in the imaging optical system is a wide-angle lens such as a fisheye lens, for example. The imaging optical system forms an image of a subject on an optical detection surface of the image sensor.

The image sensor includes a charge coupled device (CCD) image sensor, a complementary metal-oxide semiconductor (CMOS) image sensor, or the like, for example. A plurality of pixels are arrayed on the optical detection surface of the image sensor. The image sensor generates a captured image by capturing the image of the subject formed on the optical detection surface. The imaging unit 11 outputs the captured image generated by the image sensor to the processor 13 in a wired or wireless manner. The imaging unit 11 may output the captured image to external apparatuses, such as an electronic control unit (ECU), a display, and a navigation apparatus mounted in the moveable body 1. The imaging unit 11 may include a function to perform predetermined image processing on the captured image, such as white balance adjustment, exposure adjustment, or gamma correction.

The communication interface 12 is an interface for communicating with various control systems of the moveable body 1 in a wired or wireless manner. The communication interface 12 communicates with a communication system for controlling travel of the moveable body 1, a communication system for controlling aspects other than travel of the moveable body 1 (such as turning headlights on/off, flashing of turn signals, or honking of the horn), and the like.

The storage 14 includes a primary storage device, a secondary storage device, and the like, for example. The storage 14 stores various information, programs, and the like necessary for operation of the image processing apparatus 10.

Examples of the processor 13 include a dedicated processor such as a digital signal processor (DSP) and a general-purpose processor such as a central processing unit (CPU). The processor 13 controls overall operations of the image processing apparatus 10. For example, the processor 13 performs an action determination process to detect the state of another moveable body from the surrounding image captured by the imaging unit 11 and determine an action of the moveable body 1 based on the detected state of the other moveable body. Examples of the state of the other moveable body detected by the processor 13 include a first state, a second state, and a third state.

As the first state of the other moveable body, the processor 13 detects one of the following states, for example: a state of closing the distance from the moveable body 1, a state of using the horn to intimidate the moveable body 1, a state of zig-zagging behind the moveable body 1, a state of flashing headlights behind the moveable body 1, a state of tailgating or following the moveable body 1, or a state of approaching the moveable body 1 from the side. As the second state of the other moveable body, the processor 13 detects one of continuation of the first state or repetition of the first state, for example. As the third state of the other moveable body, the processor 13 detects one of continuation of the first state or repetition of the first state, for example.

The processor 13 accesses various control systems of the moveable body 1 via the communication interface 12 to determine an action of the moveable body 1. Examples of the action of the moveable body 1 determined by the processor 13 include a first action, a second action, and a third action.

As the first action of the moveable body 1, the processor 13 determines one of the following, for example: continue traveling at the legal speed limit, change lanes, honk the horn to alert the other moveable body, evacuate to the nearest convenience store, or evacuate to the nearest service area or parking area. The nearest convenience store and the nearest service area or parking area are also collectively referred to as an evacuation location. For example, the processor 13 accesses the control system for controlling travel of the moveable body 1 and determines the first action for the moveable body 1, such as to continue traveling at the legal speed limit, change lanes, evacuate to the nearest convenience store, or evacuate to the nearest service area or parking area. For example, the processor 13 accesses the control system for controlling aspects other than travel of the moveable body 1 and determines the first action for the moveable body 1, such as to honk the horn to alert the other moveable body.

As the second action of the moveable body 1, the processor 13 determines one of the following, for example: notify the police, stop, decelerate, evacuate to the nearest convenience store or evacuate to the nearest service area or parking area, record on a drive recorder, upload surrounding images to a predetermined network, or display that the other moveable body is driving recklessly. The second action is also referred to as an "action to avoid danger" and is an action taken by the moveable body 1 when, after the moveable body 1 takes the first action, the first state is continued or repeated by the other moveable body.

For example, the processor 13 accesses the control system for controlling travel of the moveable body 1 and determines the second action for the moveable body 1, such as to stop, decelerate, evacuate to the nearest convenience store, or evacuate to the nearest service area or parking area. For example, the processor 13 accesses the control system for controlling aspects other than travel of the moveable body 1 and determines the second action for the moveable body 1, such as to record on a drive recorder or display that the other moveable body is driving recklessly.

As the third action of the moveable body 1, the processor 13 determines one of the following, for example: notify the police, stop, evacuate to the nearest convenience store or evacuate to the nearest service area or parking area, or lock the doors after stopping. The third action is also referred to as an "emergency evacuation action" and is an action taken by the moveable body 1 when, after the moveable body 1 takes the second action, the first state is continued or repeated by the other moveable body.

For example, the processor 13 accesses the control system for controlling travel of the moveable body 1 and determines the third action for the moveable body 1, such as to stop, evacuate to the nearest convenience store, or evacuate to the nearest service area or parking area. For example, the processor 13 accesses the control system for controlling aspects other than travel of the moveable body 1 and determines the third action for the moveable body 1, such as to lock the doors after stopping.

The processor 13 performs the following operations as the action determination process. The processor 13 detects the state of another moveable body from the surrounding image captured by the imaging unit 11 and determines the first action of the moveable body 1 based on the detected first state of the other moveable body. The processor 13 outputs information instructing to perform the determined first action to the control system of the moveable body 1 via the communication interface 12.

For example, the processor 13 determines the first action of the moveable body 1, outputs information, to the moveable body 1 via the communication interface 12, instructing to continue traveling at the legal speed limit, change lanes, honk the horn to alert the other moveable body, evacuate to the nearest convenience store, evacuate to the nearest service area or parking area, or the like, and causes the moveable body 1 to perform these operations.

After the first action by the moveable body 1, the processor 13 detects the state of the other moveable body from the surrounding image captured by the imaging unit 11 and determines the second action of the moveable body 1 when, based on the detected second state of the other moveable body, the processor 13 judges that the other moveable body is driving recklessly. The processor 13 outputs information instructing to perform the determined second action to the control system of the moveable body 1 via the communication interface 12.

For example, the processor 13 determines the second action of the moveable body 1, outputs information, to the moveable body 1 via the communication interface 12, instructing to notify the police, stop, decelerate, evacuate to the nearest convenience store, evacuate to the nearest service area or parking area, record on a drive recorder, upload surrounding images to a predetermined network, display that the other moveable body is driving recklessly, or the like, and causes the moveable body 1 to perform these operations.

In other words, the processor 13 presumes that the other moveable body is driving aggressively when it is judged that the other moveable body is still driving recklessly after the first action of the moveable body 1. The processor 13 then determines the second action of the moveable body 1 to more accurately detect whether the other moveable body is driving aggressively.

After the second action by the moveable body 1, the processor 13 detects the state of the other moveable body from the surrounding image captured by the imaging unit 11 and determines the third action of the moveable body 1 when, based on the detected third state of the other moveable body, the processor 13 judges that the other moveable body is driving recklessly. The processor 13 outputs information instructing to perform the determined third action to the control system of the moveable body 1 via the communication interface 12.

For example, the processor 13 determines the third action of the moveable body 1, outputs information, to the moveable body 1 via the communication interface 12, instructing to notify the police, stop, evacuate to the nearest convenience store, evacuate to the nearest service area or parking area, lock the doors after stopping, or the like, and causes the moveable body 1 to perform these operations.

In other words, the processor 13 presumes that the other moveable body is driving aggressively when it is judged that the other moveable body is still driving recklessly after the second action of the moveable body 1. The processor 13 then determines the third action of the moveable body 1 to more accurately detect whether the other moveable body is driving aggressively.

As described above, the processor 13 determines the second action of the moveable body 1 when judging that the other moveable body is driving recklessly based on the second state of the other moveable body detected from a surrounding image captured by the imaging unit 11 after the first action by the moveable body 1. Furthermore, the processor 13 determines the third action of the moveable body 1 when judging that the other moveable body is driving recklessly based on the third state of the other moveable body detected from a surrounding image captured by the imaging unit 11 after the second action by the moveable body 1.

The image processing apparatus 10 according to the present embodiment detects the first state of another moveable body from the surrounding image capturing the surroundings of the moveable body 1 and determines the first action of the moveable body 1 based on the first state. After the first action of the moveable body 1, the second state of the other moveable body is then detected from the surrounding image capturing the surroundings of the moveable body 1, and the second action of the moveable body 1 is determined when, based on the second state, it is judged that the other moveable body is driving recklessly. In other words, it is judged whether the other moveable body is still driving recklessly after the first action of the moveable body 1, thereby allowing accurate judgment of whether the other moveable body is driving aggressively with respect to the moveable body 1. That is, the judgment accuracy of aggressive driving can be increased as compared to a known method of judging whether the other moveable body is driving aggressively with respect to the moveable body 1 simply by detecting only the state of the other moveable body. The moveable body 1 can thereby take appropriate measures with respect to another moveable body that is actually driving aggressively. This configuration can therefore facilitate traffic.

### <Specific Examples of Actions by Moveable Body 1>

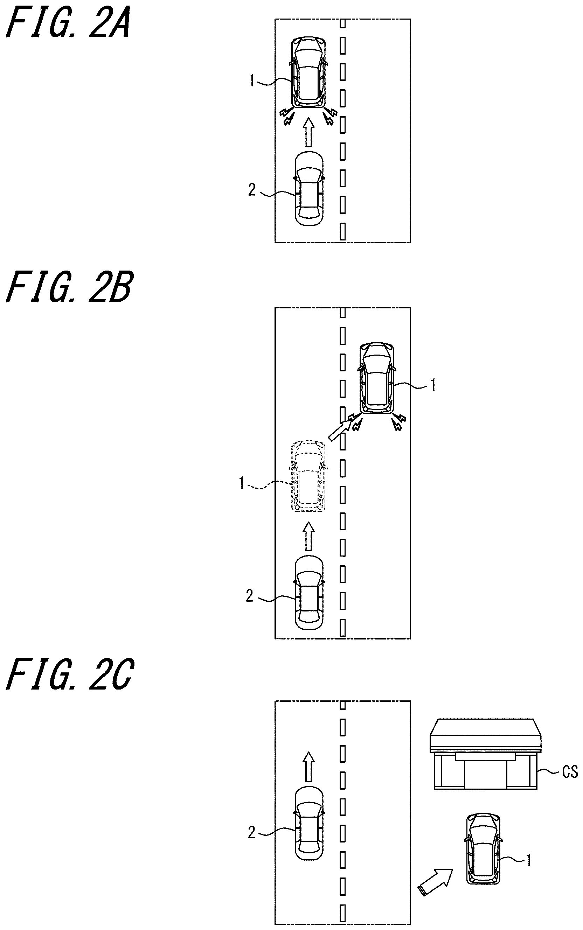

Next, specific examples of the actions by the moveable body 1 when another moveable body 2 is driving aggressively with respect to the moveable body 1 are described with reference to FIGS. 2A to 2C, FIGS. 3A to 3C, FIGS. 4A to 4C, FIGS. 5A to 5C, FIGS. 6A to 6C, and FIGS. 7A to 7C.

### [Case of First Aggressive Driving]

As illustrated in FIG. 2A, the image processing apparatus 10 captures an image of the surrounding area behind the moveable body 1 using the imaging unit 11 disposed at a position from which the imaging unit 11 can capture the surrounding area behind the moveable body 1. The image processing apparatus 10 calculates the distance between the moveable body 1 and the other moveable body 2.

The image processing apparatus 10 presumes that the other moveable body 2 is performing first aggressive driving based on the surrounding image behind the moveable body 1 and the distance between the moveable body 1 and the other moveable body 2. In this case, as illustrated in FIG. 2B, the image processing apparatus 10 determines "change lanes" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1 and the distance between the moveable body 1 and the other moveable body 2, that the first aggressive driving by the other moveable body 2 still continues after the first action of the moveable body 1. In this case, as illustrated in FIG. 2C, the image processing apparatus 10 determines "evacuate to the nearest convenience store" as the second action of the moveable body 1 and outputs information instructing to perform the second action to the moveable body 1.

### [Case of Second Aggressive Driving]

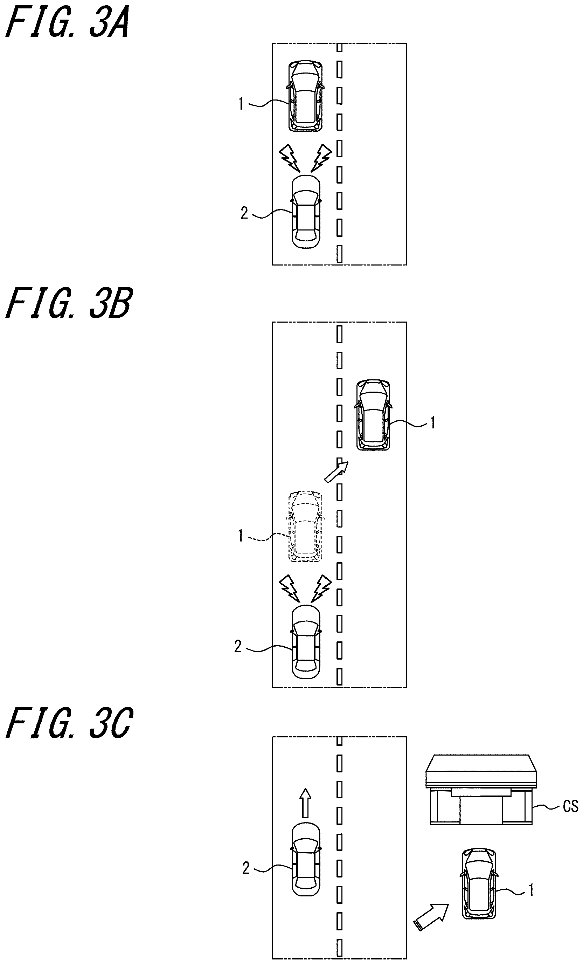

As illustrated in FIG. 3A, the image processing apparatus 10 captures an image of the surrounding area behind the moveable body 1 using the imaging unit 11 disposed at a position from which the imaging unit 11 can capture the surrounding area behind the moveable body 1. The image processing apparatus 10 detects honking of the horn by the other moveable body 2 using the microphone mounted in the moveable body 1.

The image processing apparatus 10 presumes that the other moveable body 2 is performing second aggressive driving based on the surrounding image behind the moveable body 1 and the honking of the horn by the other moveable body 2. In this case, as illustrated in FIG. 3B, the image processing apparatus 10 determines "change lanes" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1 and the honking of the horn by the other moveable body 2, that the first aggressive driving by the other moveable body 2 still continues after the first action of the moveable body 1. In this case, as illustrated in FIG. 3C, the image processing apparatus 10 determines "evacuate to the nearest convenience store" as the second action of the moveable body 1 and outputs information instructing to perform the second action to the moveable body 1.

### [Case of Third Aggressive Driving]

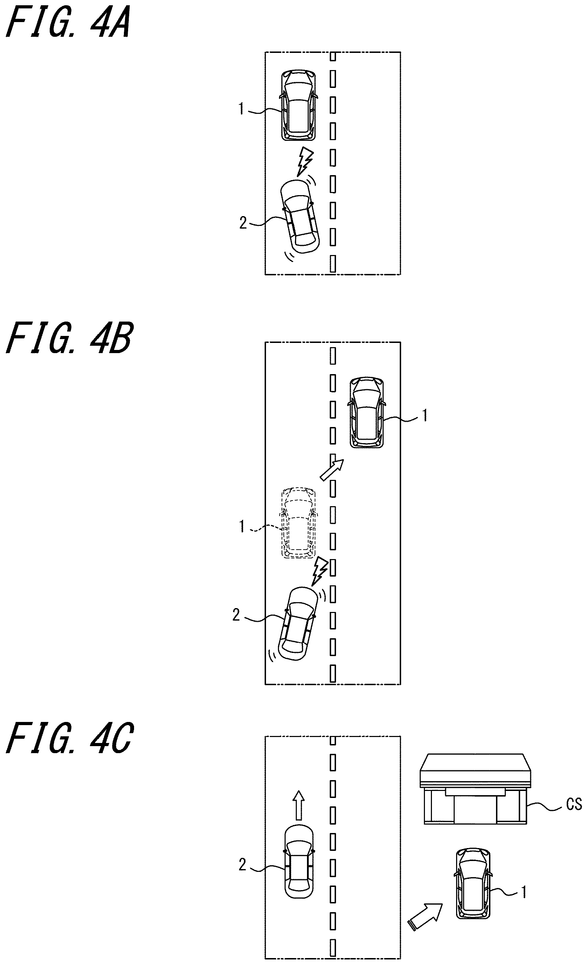

As illustrated in FIG. 4A, the image processing apparatus 10 captures an image of the surrounding area behind the moveable body 1 using the imaging unit 11 disposed at a position from which the imaging unit 11 can capture the surrounding area behind the moveable body 1. The image processing apparatus 10 calculates the distance between the moveable body 1 and the other moveable body 2.

The image processing apparatus 10 presumes that the other moveable body 2 is performing third aggressive driving based on the surrounding image behind the moveable body 1 and the distance between the moveable body 1 and the other moveable body 2. In this case, as illustrated in FIG. 4B, the image processing apparatus 10 determines "change lanes" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1 and the distance between the moveable body 1 and the other moveable body 2, that the first aggressive driving by the other moveable body 2 still continues after the first action of the moveable body 1. In this case, as illustrated in FIG. 4C, the image processing apparatus 10 determines "evacuate to the nearest convenience store" as the second action of the moveable body 1 and outputs information instructing to perform the second action to the moveable body 1.

### [Case of Fourth Aggressive Driving]

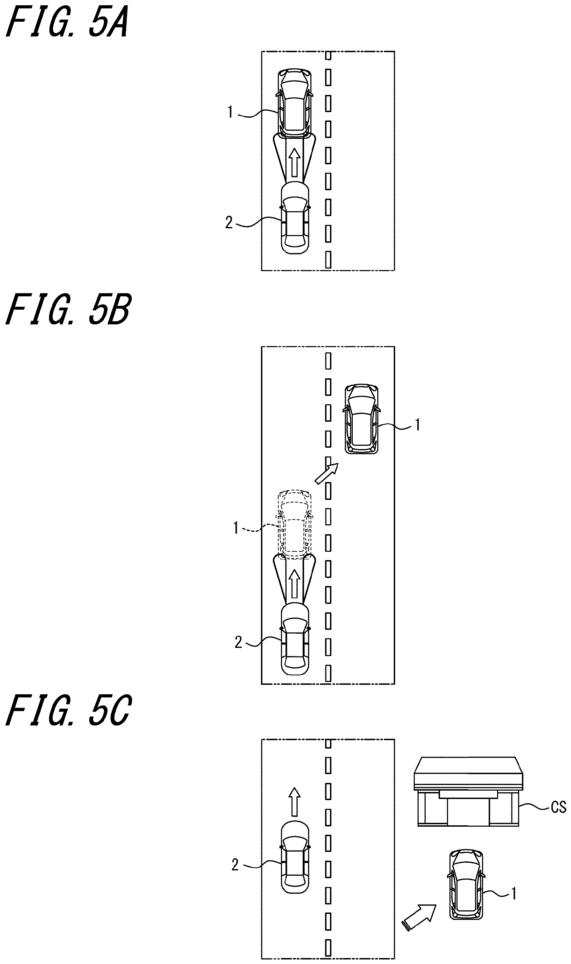

As illustrated in FIG. 5A, the image processing apparatus 10 captures an image of the surrounding area behind the moveable body 1 using the imaging unit 11 disposed at a position from which the imaging unit 11 can capture the surrounding area behind the moveable body 1. The image processing apparatus 10 calculates the distance between the moveable body 1 and the other moveable body 2. Based on the surrounding image captured by the imaging unit 11, the image processing apparatus 10 detects that the other moveable body 2 is blinking its headlights behind the moveable body 1, or that the other moveable body 2 has its headlights on the high beam setting behind the moveable body 1.

The image processing apparatus 10 presumes that the other moveable body 2 is performing fourth aggressive driving based on the surrounding image behind the moveable body 1, the distance between the moveable body 1 and the other moveable body 2, and the state of the headlights of the other moveable body 2. In this case, as illustrated in FIG. 5B, the image processing apparatus 10 determines "change lanes" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1, the distance between the moveable body 1 and the other moveable body 2, and the state of the headlights of the other moveable body 2, that the first aggressive driving by the other moveable body 2 still continues after the first action of the moveable body 1. In this case, as illustrated in FIG. 5C, the image processing apparatus 10 determines "evacuate to the nearest convenience store" as the second action of the moveable body 1 and outputs information instructing to perform the second action to the moveable body 1.

### [Case of Fifth Aggressive Driving]

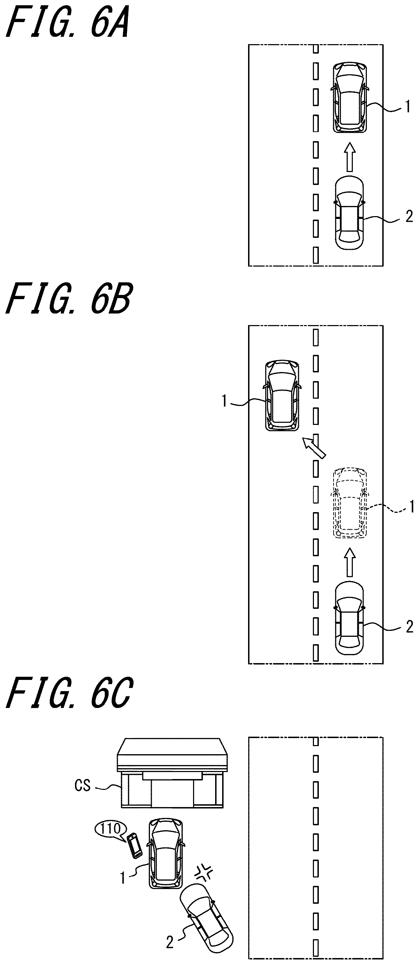

As illustrated in FIG. 6A, the image processing apparatus 10 captures an image of the surrounding area behind the moveable body 1 using the imaging unit 11 disposed at a position from which the imaging unit 11 can capture the surrounding area behind the moveable body 1. The image processing apparatus 10 calculates the distance between the moveable body 1 and the other moveable body 2.

The image processing apparatus 10 presumes that the other moveable body 2 is performing fifth aggressive driving based on the surrounding image behind the moveable body 1 and the distance between the moveable body 1 and the other moveable body 2. In this case, as illustrated in FIG. 6B, the image processing apparatus 10 determines "change lanes" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1 and the distance between the moveable body 1 and the other moveable body 2, that the fifth aggressive driving by the other moveable body 2 still continues after the first action of the moveable body 1. In this case, as illustrated in FIG. 6C, the image processing apparatus 10 determines "evacuate to the nearest convenience store" as the second action of the moveable body 1 and outputs information instructing to perform the second action to the moveable body 1.

Subsequently, the image processing apparatus 10 determines the third action of the moveable body 1 when judging, based on the surrounding image of the moveable body 1 and the distance between the moveable body 1 and the other moveable body 2, that the fifth aggressive driving by the other moveable body 2 still continues after the second action of the moveable body 1. In this case, as illustrated in FIG. 6C, the image processing apparatus 10 determines "lock doors and notify police" as the third action of the moveable body 1 and outputs information instructing to perform the third action to the moveable body 1.

### [Case of Sixth Aggressive Driving]

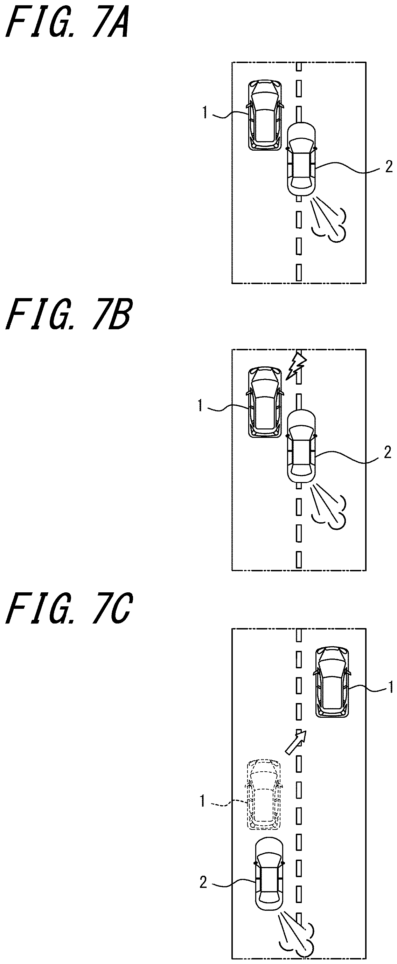

As illustrated in FIG. 7A, the image processing apparatus 10 captures images of the surrounding area behind, on the back surface, to the right, and on the right surface of the moveable body 1 using the imaging unit 11 disposed at a position from which the imaging unit 11 can capture the surrounding area behind the moveable body 1, at least a portion of the area on the back surface of the moveable body 1, the surrounding area to the right of the moveable body 1, and at least a portion of the right surface of the moveable body 1. The image processing apparatus 10 calculates the distance between the moveable body 1 and the other moveable body 2.

The image processing apparatus 10 presumes that the other moveable body 2 is performing sixth aggressive driving based on the surrounding image behind the moveable body 1, the surrounding image to the right of the moveable body 1, and the distance between the moveable body 1 and the other moveable body 2. In this case, as illustrated in FIG. 7B, the image processing apparatus 10 determines "honk the horn to alert the other moveable body" as the first action of the moveable body 1 and outputs information instructing to perform the first action to the moveable body 1.

Subsequently, the image processing apparatus 10 determines the second action of the moveable body 1 when judging, based on the surrounding image behind the moveable body 1, the surrounding image to the right of the moveable body 1, and the distance between the moveable body 1 and the other moveable body 2, that the sixth aggressive driving by the other moveable body 2 still continues after the first action of the moveable body 1. In this case, as illustrated in FIG. 7C, the image processing apparatus 10 determines "change lanes, decelerate" as the second action of the moveable body 1 and outputs information instructing to perform the second action to the moveable body 1.

Subsequently, the image processing apparatus 10 determines the third action of the moveable body 1 when judging, based on the surrounding image behind the moveable body 1 and the distance between the moveable body 1 and the other moveable body 2, that the sixth aggressive driving by the other moveable body 2 still continues after the second action of the moveable body 1. In this case, the image processing apparatus 10 determines "stop to avoid collision" as the third action of the moveable body 1 and outputs information instructing to perform the action to the moveable body 1.

Table 1 summarizes the first and second actions of the moveable body 1 determined by the processor 13 and the first and second states of the other moveable body 2 detected by the processor 13 based on surrounding images and the like during travel on a general road.

**[Table 1]**

| First State | First Action | Second State | Second Action |
|---|---|---|---|
| other moveable body 2 is closing the distance from moveable body 1 | maintain legal speed limit and continue traveling | first state of other moveable body 2 continues | drop by the nearest convenience store or the like and yield |
| | confirm safety of lane to change to, and change lanes | other moveable body 2 is tailgating and following moveable body 1 | |
| other moveable body 2 is honking the horn at moveable body 1 | maintain legal speed limit and continue traveling | first state of other moveable body 2 continues | drop by the nearest convenience store or the like and yield |
| | confirm safety of lane to change to, and change lanes | other moveable body 2 is tailgating and following moveable body 1 | |
| other moveable body 2 is zig-zagging behind moveable body 1 | maintain legal speed limit and continue traveling | first state of other moveable body 2 continues | drop by the nearest convenience store or the like and yield |
| | confirm safety of lane to change to, and change lanes | other moveable body 2 is tailgating and following moveable body 1 | |
| other moveable body 2 is flashing its headlights at moveable body 1 | maintain legal speed limit and continue traveling | first state of other moveable body 2 continues | drop by the nearest convenience store or the like and yield |
| | confirm safety of lane to change to, and change lanes | other moveable body 2 is tailgating and following moveable body 1 | |
| other moveable body 2 is tailgating and following moveable body 1 | drop by the nearest convenience store or the like and yield | first state of other moveable body 2 continues | stop at nearest convenience store or the like and notify police |
| | confirm safety of lane to change to, and change lanes | | |
| other moveable body 2 is unreasonably approaching moveable body 1 from the side | honk the horn to alert other moveable body 2 | other moveable body 2 stops approaching from the side | continue traveling |
| | | other moveable body 2 continues to approach from the side | decelerate to avoid collision |

For example, when the first state of the other moveable body 2 is "the other moveable body 2 is closing the distance from the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "drop by the nearest convenience store or the like and yield" as the second action of the moveable body 1.

For example, when the first state of the other moveable body 2 is "the other moveable body 2 is honking the horn at the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "drop by the nearest convenience store or the like and yield" as the second action of the moveable body 1.

For example, when the first state of the other moveable body 2 is "the other moveable body 2 is zig-zagging behind the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "drop by the nearest convenience store or the like and yield" as the second action of the moveable body 1.

For example, when the first state of the other moveable body 2 is "the other moveable body 2 is flashing its headlights at the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "drop by the nearest convenience store or the like and yield" as the second action of the moveable body 1.

For example, when the first state of the other moveable body 2 is "the other moveable body 2 is tailgating and following the moveable body 1", then the processor 13 determines "drop by the nearest convenience store or the like and yield" or "confirm safety of lane to change to, and change lanes" as the first action of the moveable body 1.

Furthermore, when the second state of the other moveable body 2 is "the first state of the other moveable body 2 continues", then the processor 13 determines "stop at the nearest convenience store or the like and notify the police" as the second action of the moveable body 1.

For example, when the first state of the other moveable body 2 is "the other moveable body 2 is approaching the moveable body 1 from the side", then the processor 13 determines "honk the horn to alert the other moveable body 2" as the first action of the moveable body 1.

Furthermore, when the second state of the other moveable body 2 is "the other moveable body 2 stops approaching from the side" or "the other moveable body 2 continues to approach from the side", then the processor 13 respectively determines "continue traveling" or "decelerate to avoid collision" as the second action of the moveable body 1.

Table 2 summarizes the first and second actions of the moveable body 1 determined by the processor 13 and the first and second states of the other moveable body 2 detected by the processor 13 based on surrounding images and the like during travel on a highway.

**[Table 2]**

| First State | First Action | Second State | Second Action |
|---|---|---|---|
| other moveable body 2 is closing the distance from moveable body 1 | maintain legal speed limit and continue traveling | first state of other moveable body 2 continues | evacuate to a safe place such as a service area or parking area |
| | confirm safety of lane to change to, and change lanes | other moveable body 2 is tailgating and following moveable body 1 | |
| other moveable body 2 is honking the horn at moveable body 1 | maintain legal speed limit and continue traveling | first state of other moveable body 2 continues | evacuate to a safe place such as a service area or parking area |
| | confirm safety of lane to change to, and change lanes | other moveable body 2 is tailgating and following moveable body 1 | |
| other moveable body 2 is zig-zagging behind moveable body 1 | maintain legal speed limit and continue traveling | first state of other moveable body 2 continues | evacuate to a safe place such as a service area or parking area |
| | confirm safety of lane to change to, and change lanes | other moveable body 2 is tailgating and following moveable body 1 | |
| other moveable body 2 is flashing its headlights at moveable body 1 | maintain legal speed limit and continue traveling | first state of other moveable body 2 continues | evacuate to a safe place such as a service area or parking area |
| | confirm safety of lane to change to, and change lanes | other moveable body 2 is tailgating and following moveable body 1 | |
| other moveable body 2 is tailgating and following moveable body 1 | enter the nearest service area or parking area | first state of other moveable body 2 continues | notify police |
| | confirm safety of lane to change to, and change lanes | | enter nearest service area or parking area and notify police |
| other moveable body 2 is unreasonably approaching moveable body 1 from the side | honk the horn to alert other moveable body 2 | other moveable body 2 stops approaching from the side | continue traveling |
| | | other moveable body 2 continues to approach from the side | decelerate to avoid collision |

For example, when the first state of the other moveable body 2 is "the other moveable body 2 is closing the distance from the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "evacuate to a safe place such as a service area or parking area" as the second action of the moveable body 1.

For example, when the first state of the other moveable body 2 is "the other moveable body 2 is honking the horn at the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "evacuate to a safe place such as a service area or parking area" as the second action of the moveable body 1.

For example, when the first state of the other moveable body 2 is "the other moveable body 2 is zig-zagging behind the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "evacuate to a safe place such as a service area or parking area" as the second action of the moveable body 1.

For example, when the first state of the other moveable body 2 is "the other moveable body 2 is flashing its headlights at the moveable body 1", then the processor 13 determines "maintain legal speed limit and continue traveling" or "confirm safety of lane to change to, and change lanes" as the first action of the moveable body 1.

Furthermore, when the second state of the other moveable body 2 is "the first state of the other moveable body 2 continues" or "the other moveable body 2 is tailgating and following the moveable body 1", then the processor 13 determines "evacuate to a safe place such as a service area or parking area" as the second action of the moveable body 1.

For example, when the first state of the other moveable body 2 is "tailgating and following the moveable body 1", then the processor 13 determines "enter the nearest service area or parking area" or "confirm safety of lane to change to, and change lanes" as the first action of the moveable body 1.

Furthermore, when the second state of the other moveable body 2 is "the first state of the other moveable body 2 continues", then the processor 13 determines "notify the police" or "enter the nearest service area or parking area and notify the police" as the second action of the moveable body 1.

For example, when the first state of the other moveable body 2 is "the other moveable body 2 is approaching the moveable body 1 from the side", then the processor 13 determines "honk the horn to alert the other moveable body 2" as the first action of the moveable body 1.

Furthermore, when the second state of the other moveable body 2 is "the other moveable body 2 stops approaching from the side" or "the other moveable body 2 continues to approach from the side", then the processor 13 determines "continue traveling" or "decelerate to avoid collision" as the second action of the moveable body 1.

As described above, the image processing apparatus 10 detects the first state of the other moveable body 22 from the surrounding image capturing the surroundings of the moveable body 1 and determines the first action of the moveable body 1 based on the first state. The image processing apparatus 10 detects the second state of the other moveable body 22 from a surrounding image capturing the surroundings of the moveable body 1 after the first action of the moveable body 1, and when judging that the other moveable body 22 is driving recklessly based on the second state, the image processing apparatus 10 determines the second action of the moveable body 1. In other words, the image processing apparatus 10 judges whether the other moveable body 22 is still driving recklessly after the first action of the moveable body 1, thereby allowing accurate judgment of whether the other moveable body 2 is driving aggressively with respect to the moveable body. The moveable body 1 can thereby take appropriate measures with respect to another moveable body 22 that is actually driving aggressively. This configuration can therefore facilitate traffic.

### <Operations of Image Processing Apparatus>

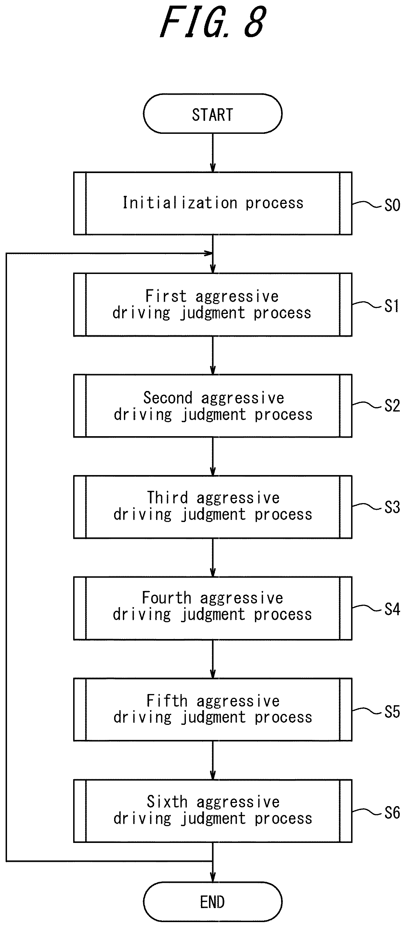

With reference to FIG. 8, an image processing method used by the image processing apparatus 10 according to the present embodiment is described next. FIG. 8 is a flowchart illustrating an example image processing method used in the image processing apparatus 10 according to the present embodiment.

Step S0: the processor 13 performs an initialization process.

Step S1: the processor 13 performs the first aggressive driving judgment process. Examples of information that the processor 13 uses in the first aggressive driving judgment process include the speed of the moveable body 1, the distance between the moveable body 1 and the other moveable body 2 corresponding to the speed of the moveable body 1 (see Table 3), and the staying time that the other moveable body 2 stays within a predetermined range from the moveable body 1.

**[Table 3]**

| Speed [km] | Distance between vehicles (A + B) [m] |
|---|---|
| 0 | 0 |
| 5 | 3 |
| 10 | 4 |
| 15 | 6 |
| 20 | 8 |
| 25 | 10 |
| 30 | 13 |
| 35 | 15 |
| 40 | 18 |
| 45 | 22 |
| 50 | 26 |
| 55 | 30 |
| 60 | 34 |
| 65 | 38 |
| 70 | 43 |
| 75 | 48 |
| 80 | 53 |
| 85 | 59 |
| 90 | 65 |
| 95 | 71 |
| 100 | 78 |
| 105 | 85 |
| 110 | 92 |
| 115 | 99 |
| 120 | 106 |
| 125 | 115 |
| 130 | 124 |
| 135 | 132 |
| 140 | 141 |
| 145 | 150 |
| 150 | 159 |
| 155 | 169 |
| 160 | 178 |
| 165 | 189 |
| 170 | 199 |
| 175 | 210 |
| 180 | 221 |
| 185 | 232 |
| 190 | 244 |
| 195 | 255 |
| 200 | 267 |

For example, when the other moveable body 2 stays for 3 seconds or more within a predetermined range from the moveable body 1, the processor 13 judges that the other moveable body 2 is performing the first aggressive driving. For example, when the other moveable body 2 stays for less than 3 seconds within a predetermined range from the moveable body 1, the processor 13 judges that the other moveable body 2 is not performing the first aggressive driving.

Step S2: the processor 13 performs the second aggressive driving judgment process. Examples of information that the processor 13 uses in the second aggressive driving judgment process include the speed of the moveable body 1, the distance between the moveable body 1 and the other moveable body 2 corresponding to the speed of the moveable body 1 (see Table 3), and the number of times and volume at which the horn of the other moveable body 2 is honked.

For example, when the other moveable body 2 honks the horn five or more times in a minute, the processor 13 judges that the other moveable body 2 is performing the second aggressive driving. For example, when the other moveable body 2 honks the horn fewer than five times in a minute, the processor 13 judges that the other moveable body 2 is not performing the second aggressive driving.

Step S3: the processor 13 performs the third aggressive driving judgment process. Examples of information that the processor 13 uses in the third aggressive driving judgment process include the speed of the moveable body 1, the distance between the moveable body 1 and the other moveable body 2 corresponding to the speed of the moveable body 1 (see Table 3), the staying time that the other moveable body 2 stays within a predetermined range from the moveable body 1, the amplitude of zig-zagging by the other moveable body 2, and the period of zig-zagging by the other moveable body 2.

For example, when the amplitude of zig-zagging by the other moveable body 2 is 900 mm or more, and the period of zig-zagging by the other moveable body 2 is 1 second or more and 5 seconds or less, the processor 13 judges that the other moveable body 2 is performing the third aggressive driving. For example, when the amplitude of zig-zagging by the other moveable body 2 is less than 900 mm, or the period of zig-zagging by the other moveable body 2 is longer than 5 seconds, the processor 13 judges that the other moveable body 2 is not performing the third aggressive driving. Here, 900 mm is substantially half of 1800 mm, which is the width of a standard vehicle.

Step S4: the processor 13 performs the fourth aggressive driving judgment process. Examples of information that the processor 13 uses in the fourth aggressive driving judgment process include the speed of the moveable body 1, the distance between the moveable body 1 and the other moveable body 2 corresponding to the speed of the moveable body 1 (see Table 3), the staying time that the other moveable body 2 stays within a predetermined range from the moveable body 1, the illuminance of the headlights on the other moveable body 2, the frequency of headlight flashing by the other moveable body 2, and the on/off cycle of headlight flashing by the other moveable body 2.

For example, when the illuminance of the headlights on the other moveable body 2 is 10,000 lx or more, the processor 13 judges that the other moveable body 2 is performing the fourth aggressive driving. For example, when the illuminance of the headlights on the other moveable body 2 is less than 10,000 lx, the processor 13 judges that the other moveable body 2 is not performing the fourth aggressive driving.

For example, when the on/off cycle of headlight flashing by the other moveable body 2 is 500 milliseconds or more and 2 seconds or less, the processor 13 judges that the other moveable body 2 is performing the fourth aggressive driving. For example, when the on/off cycle of headlight flashing by the other moveable body 2 is longer than 2 seconds, the processor 13 judges that the other moveable body 2 is not performing the fourth aggressive driving.

Step S5: the processor 13 performs the fifth aggressive driving judgment process. Examples of information that the processor 13 uses in the fifth aggressive driving judgment process include the speed of the moveable body 1, the distance between the moveable body 1 and the other moveable body 2 corresponding to the speed of the moveable body 1 (see Table 3), the staying time that the other moveable body 2 stays within a predetermined range from the moveable body 1, and the number of times the other moveable body 2 tailgates and follows.

For example, when the other moveable body 2 repeatedly tailgates and follows two or more times even after the moveable body 1 changes lanes, the processor 13 judges that the other moveable body 2 is performing the fifth aggressive driving. For example, when the other moveable body 2 does not tailgate and follow after the moveable body 1 changes lanes, the processor 13 judges that the other moveable body 2 is not performing the fifth aggressive driving.

Step S6: the processor 13 performs the sixth aggressive driving judgment process. Examples of information that the processor 13 uses in the sixth aggressive driving judgment process include the speed of the moveable body 1, the distance between the moveable body 1 and the other moveable body 2 corresponding to the speed of the moveable body 1 (see Table 3), the distance between the moveable body 1 and the other moveable body 2 at the side, and the number of times the other moveable body 2 approaches from the side.

For example, when the distance between the moveable body 1 and the other moveable body 2 at the side is less than 2 m, the processor 13 judges that the other moveable body 2 is performing the sixth aggressive driving. For example, when the distance between the moveable body 1 and the other moveable body 2 at the side is 2 m or more, the processor 13 judges that the other moveable body 2 is not performing the sixth aggressive driving.

For example, when the other moveable body 2 repeatedly approaches from the side two or more times even after the moveable body 1 changes lanes, the processor 13 judges that the other moveable body 2 is performing the sixth aggressive driving. For example, when the other moveable body 2 does not approach from the side after the moveable body 1 changes lanes, the processor 13 judges that the other moveable body 2 is not performing the sixth aggressive driving.

The processor 13 executes the above-described aggressive driving judgment processes in steps S1 through S6 in parallel. The processor 13 may execute the aggressive driving judgment processes in only one step or may execute the aggressive driving judgment processes with a combination of a plurality of steps. Execution of the aggressive driving judgment processes by a combination of a plurality of steps enables a more accurate judgment of whether the other moveable body 2 is driving aggressively.

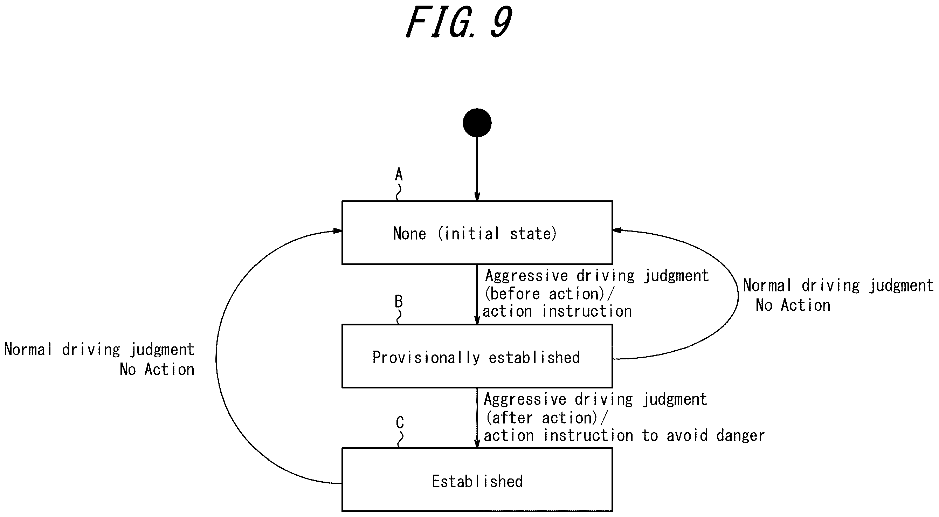

With reference to FIG. 9, an aggressive judgment state flag is briefly described next. FIG. 9 is an example state transition diagram of the aggressive judgment state flag.

As illustrated in FIG. 9, the aggressive judgment state flag has the three states of "none", "provisionally established", and "established", for example. The processor 13 manages the aggressive judgment state flag and executes aggressive driving judgment processes such as those described above in steps S1 through S6.

State A is the state of "none", i.e. an initial state.

State B is the state of "provisionally established". In state B, the processor 13 outputs an action instruction to the moveable body 1 upon presuming that the other moveable body 2 is driving aggressively based on the first state of the other moveable body 2. In state B, the processor 13 does not output an action instruction to the moveable body 1 (state B to state A) upon presuming that the other moveable body 2 is not driving aggressively based on the first state of the other moveable body 2.

State C is the state of "established". In state C, the processor 13 outputs an action instruction to avoid danger to the moveable body 1 upon presuming that the other moveable body 2 is driving aggressively based on the second state of the other moveable body 2. In state C, the processor 13 does not output an action instruction to avoid danger to the moveable body 1 (state C to state A) upon presuming that the other moveable body 2 is not driving aggressively based on the second state of the other moveable body 2.

According to the image processing method of the present embodiment, the aggressive judgment state flag has three states. In the "provisionally established" state, for example, the processor 13 outputs an action instruction to the moveable body 1, and in the "established" state, for example, the processor 13 outputs an action instruction to avoid danger to the moveable body 1. In other words, according to the image processing method of the present embodiment, the judgment of whether another moveable body 2 is driving aggressively with respect to the moveable body 1 is not made based only on the first state of the other moveable body 2. Rather, the judgment of whether another moveable body 2 is driving aggressively with respect to the moveable body 1 is made taking into consideration the second state of the other moveable body 2 after a first action of the moveable body 1. In this way, misjudgment of aggressive driving can be suppressed, and the probability of a useless conflict occurring between the moveable body 1 and the other moveable body 2 can be reduced, thereby facilitating traffic.

### <Examples of Aggressive Driving Judgment Process>

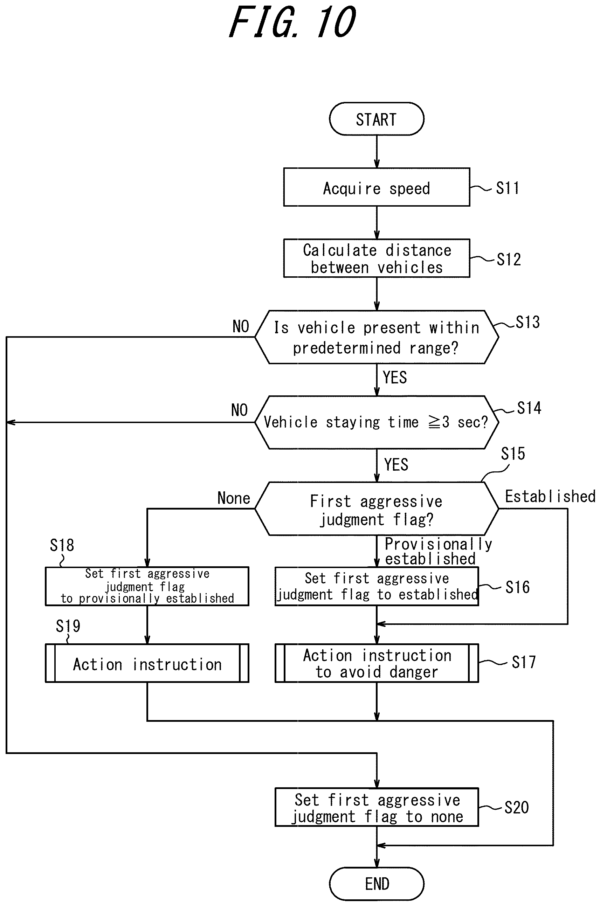

Next, examples of the aggressive driving judgment process according to the present embodiment are described with reference to FIGS. 10 through 15.

### [First Aggressive Driving Judgment Process]

FIG. 10 is a flowchart illustrating an example of a first aggressive driving judgment process. The first aggressive driving judgment process is executed by the processor 13 mounted in the image processing apparatus 10.

Step S11: the processor 13 acquires the speed of the moveable body 1 from a vehicle speed sensor mounted in the moveable body 1.

Step S12: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S13: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S13: Yes), the processor 13 proceeds to the process of step S14. When judging that another moveable body 2 is not present within a predetermined range from the moveable body 1 (step S13: No), the processor 13 proceeds to the process of step S20.

Step S14: the processor 13 judges whether the time that the other moveable body 2 stays within a predetermined range from the moveable body 1 is 3 seconds or more. When judging that the vehicle staying time is 3 seconds or more (step S14: Yes), the processor 13 proceeds to the process of step S15. When judging that the vehicle staying time is shorter than 3 seconds (step S14: No), the processor 13 proceeds to the process of step S20.

Step S15: the processor 13 judges whether a first aggressive judgment flag is in the "none" state, the "provisionally established" state, or the "established" state. When judging that the first aggressive judgment flag is in the "established" state (step S15: "established"), the processor 13 proceeds to the process of step S17. When judging that the first aggressive judgment flag is in the "provisionally established" state (step S15: "provisionally established"), the processor 13 proceeds to the process of step S16. When judging that the first aggressive judgment flag is in the "none" state (step S15: "none"), the processor 13 proceeds to the process of step S18.

Step S16: the processor 13 switches the first aggressive judgment flag from the "provisionally established" state to the "established" state.

Step S17: the processor 13 outputs information instructing to perform an action (second action) of the moveable body 1 via the communication interface 12 to the moveable body 1, thereby outputting an action instruction to avoid danger to the moveable body 1.

Step S18: the processor 13 switches the first aggressive judgment flag from the "none" state to the "provisionally established" state.

Step S19: the processor 13 outputs information instructing to perform an action (first action) of the moveable body 1 via the communication interface 12 to the moveable body 1, thereby outputting an action instruction to the moveable body 1.

Step S20: the processor 13 sets the first aggressive judgment flag to "none". In other words, the processor 13 presumes that the driver of the other moveable body 2 does not intend to drive aggressively and continues fully autonomous driving of the moveable body 1.

### [Second Aggressive Driving Judgment Process]

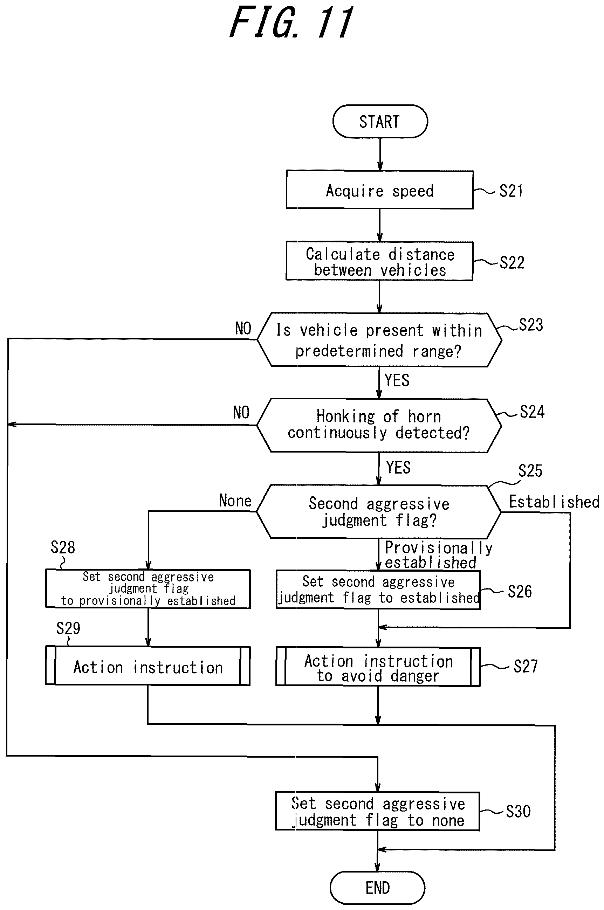

FIG. 11 is a flowchart illustrating an example of a first aggressive driving judgment process. The first aggressive driving judgment process is executed by the processor 13 mounted in the image processing apparatus 10.

Step S21: the processor 13 acquires the speed of the moveable body 1 from a vehicle speed sensor mounted in the moveable body 1.

Step S22: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S23: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S23: Yes), the processor 13 proceeds to the process of step S14. When judging that another moveable body 2 is not present within a predetermined range from the moveable body 1 (step S23: No), the processor 13 proceeds to the process of step S30.

Step S24: the processor 13 judges whether honking of a horn has been continuously detected by a microphone mounted in the moveable body 1. When judging that honking of a horn has been continuously detected (step S24: Yes), the processor 13 proceeds to the process of step S25. When judging that honking of a horn has not been continuously detected (step S24: No), the processor 13 proceeds to the process of step S30.

Step S25: the processor 13 judges whether a second aggressive judgment flag is in the "none" state, the "provisionally established" state, or the "established" state. When judging that the second aggressive judgment flag is in the "established" state (step S25: "established"), the processor 13 proceeds to the process of step S27. When judging that the second aggressive judgment flag is in the "provisionally established" state (step S25: "provisionally established"), the processor 13 proceeds to the process of step S26. When judging that the second aggressive judgment flag is in the "none" state (step S25: "none"), the processor 13 proceeds to the process of step S28.

Step S26: the processor 13 switches the second aggressive judgment flag from the "provisionally established" state to the "established" state.

Step S27: the processor 13 outputs information instructing to perform an action (second action) of the moveable body 1 via the communication interface 12 to the moveable body 1, thereby outputting an action instruction to avoid danger to the moveable body 1.

Step S28: the processor 13 switches the second aggressive judgment flag from the "none" state to the "provisionally established" state.

Step S29: the processor 13 outputs information instructing to perform an action (second action) of the moveable body 1 via the communication interface 12 to the moveable body 1, thereby outputting an action instruction to the moveable body 1.

Step S30: the processor 13 sets the second aggressive judgment flag to "none". In other words, the processor 13 presumes that the driver of the other moveable body 2 does not intend to drive aggressively and continues fully autonomous driving of the moveable body 1.

### [Third Aggressive Driving Judgment Process]

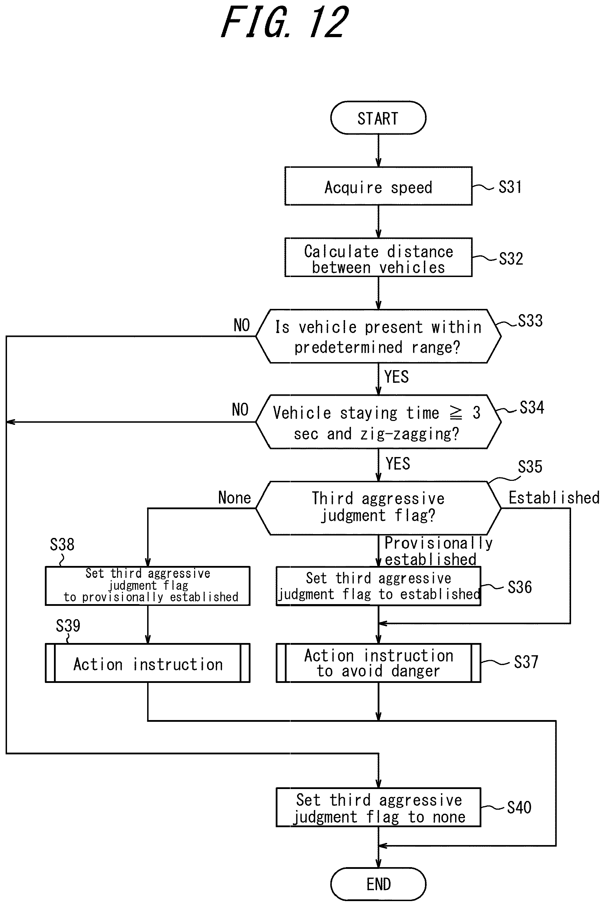

FIG. 12 is a flowchart illustrating an example of a third aggressive driving judgment process. The third aggressive driving judgment process is executed by the processor 13 mounted in the image processing apparatus 10.

Step S31: the processor 13 acquires the speed of the moveable body 1 from a vehicle speed sensor mounted in the moveable body 1.

Step S32: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S33: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S33: Yes), the processor 13 proceeds to the process of step S34. When judging that another moveable body 2 is not present within a predetermined range from the moveable body 1 (step S33: No), the processor 13 proceeds to the process of step S40.

Step S34: the processor 13 judges whether the time that the other moveable body 2 stays within a predetermined range from the moveable body 1 is 3 seconds or more, and the other moveable body 2 is zig-zagging. When judging that the vehicle staying time is 3 seconds or more and the other moveable body 2 is zig-zagging (step S34: Yes), the processor 13 proceeds to the process of step S35. When not judging that the vehicle staying time is 3 seconds or more and the other moveable body 2 is zig-zagging (step S34: No), the processor 13 proceeds to the process of step S40. For example, the processor 13 judges whether the other moveable body 2 is zig-zagging based on whether the amplitude of zig-zagging by the other moveable body 2 is a predetermined amplitude or greater, whether the period of zig-zagging by the other moveable body 2 is included within a predetermined period, or the like.

Step S35: the processor 13 judges whether a third aggressive judgment flag is in the "none" state, the "provisionally established" state, or the "established" state. When judging that the third aggressive judgment flag is in the "established" state (step S35: "established"), the processor 13 proceeds to the process of step S37. When judging that the third aggressive judgment flag is in the "provisionally established" state (step S35: "provisionally established"), the processor 13 proceeds to the process of step S36. When judging that the third aggressive judgment flag is in the "none" state (step S35: "none"), the processor 13 proceeds to the process of step S38.

Step S36: the processor 13 switches the third aggressive judgment flag from the "provisionally established" state to the "established" state.

Step S37: the processor 13 outputs information instructing to perform an action (second action) of the moveable body 1 via the communication interface 12 to the moveable body 1, thereby outputting an action instruction to avoid danger to the moveable body 1.

Step S38: the processor 13 switches the third aggressive judgment flag from the "none" state to the "provisionally established" state.

Step S39: the processor 13 outputs information instructing to perform an action (third action) of the moveable body 1 via the communication interface 12 to the moveable body 1, thereby outputting an action instruction to the moveable body 1.

Step S40: the processor 13 sets the third aggressive judgment flag to "none". In other words, the processor 13 presumes that the driver of the other moveable body 2 does not intend to drive aggressively and continues fully autonomous driving of the moveable body 1.

### [Fourth Aggressive Driving Judgment Process]

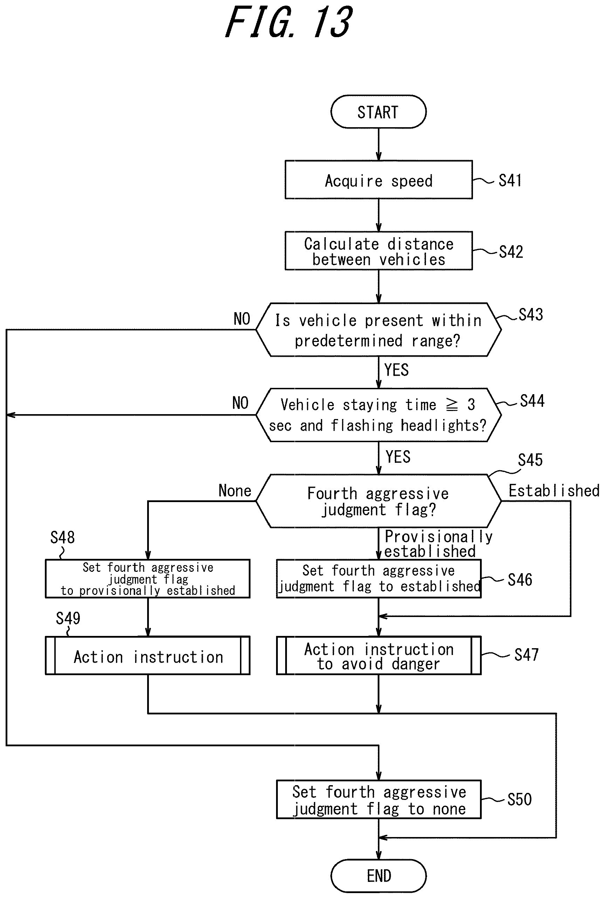

FIG. 13 is a flowchart illustrating an example of a fourth aggressive driving judgment process. The fourth aggressive driving judgment process is executed by the processor 13 mounted in the image processing apparatus 10.

Step S41: the processor 13 acquires the speed of the moveable body 1 from a vehicle speed sensor mounted in the moveable body 1.

Step S42: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S43: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S43: Yes), the processor 13 proceeds to the process of step S44. When judging that another moveable body 2 is not present within a predetermined range from the moveable body 1 (step S43: No), the processor 13 proceeds to the process of step S50.

Step S44: the processor 13 judges whether the time that the other moveable body 2 stays within a predetermined range from the moveable body 1 is 3 seconds or more, and the other moveable body 2 is flashing its headlights. When judging that the vehicle staying time is 3 seconds or more and the other moveable body 2 is flashing its headlights (step S44: Yes), the processor 13 proceeds to the process of step S45. When not judging that the vehicle staying time is 3 seconds or more and the other moveable body 2 is flashing its headlights (step S44: No), the processor 13 proceeds to the process of step S50. For example, the processor 13 judges whether the other moveable body 2 is zig-zagging based on whether the other moveable body 2 is blinking its headlights behind the moveable body 1, whether the other moveable body 2 has its headlights on the high beam setting behind the moveable body 1, or the like.

Step S45: the processor 13 judges whether a fourth aggressive judgment flag is in the "none" state, the "provisionally established" state, or the "established" state. When judging that the fourth aggressive judgment flag is in the "established" state (step S45: "established"), the processor 13 proceeds to the process of step S47. When judging that the fourth aggressive judgment flag is in the "provisionally established" state (step S45: "provisionally established"), the processor 13 proceeds to the process of step S46. When judging that the fourth aggressive judgment flag is in the "none" state (step S45: "none"), the processor 13 proceeds to the process of step S48.

Step S46: the processor 13 switches the fourth aggressive judgment flag from the "provisionally established" state to the "established" state.

Step S47: the processor 13 outputs information instructing to perform an action (second action) of the moveable body 1 via the communication interface 12 to the moveable body 1, thereby outputting an action instruction to avoid danger to the moveable body 1.

Step S48: the processor 13 switches the fourth aggressive judgment flag from the "none" state to the "provisionally established" state.

Step S49: the processor 13 outputs information instructing to perform an action (fourth action) of the moveable body 1 via the communication interface 12 to the moveable body 1, thereby outputting an action instruction to the moveable body 1.

Step S50: the processor 13 sets the fourth aggressive judgment flag to "none". In other words, the processor 13 presumes that the driver of the other moveable body 2 does not intend to drive aggressively and continues fully autonomous driving of the moveable body 1.

### [Fifth Aggressive Driving Judgment Process]

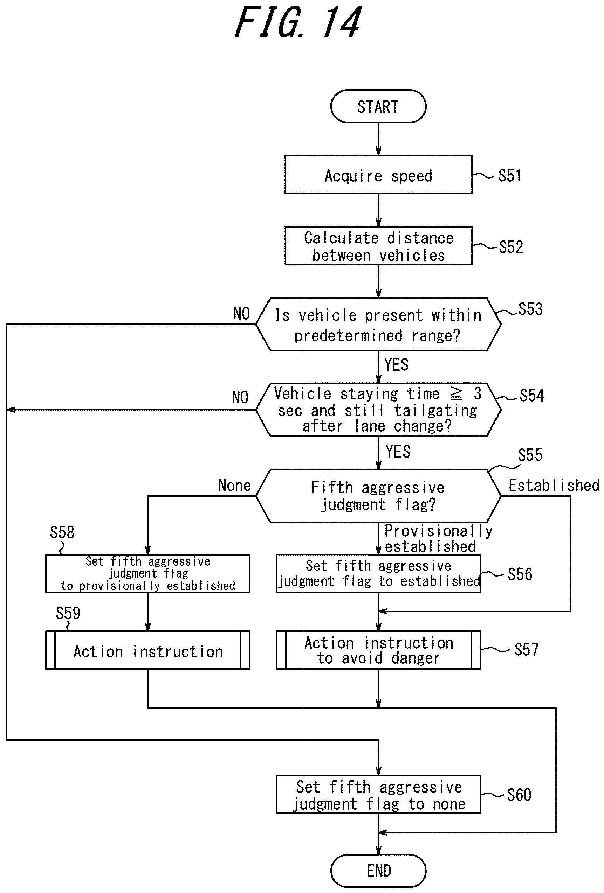

FIG. 14 is a flowchart illustrating an example of a fifth aggressive driving judgment process. The fifth aggressive driving judgment process is executed by the processor 13 mounted in the image processing apparatus 10.

Step S51: the processor 13 acquires the speed of the moveable body 1 from a vehicle speed sensor mounted in the moveable body 1.

Step S52: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S53: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S53: Yes), the processor 13 proceeds to the process of step S54. When judging that another moveable body 2 is not present within a predetermined range from the moveable body 1 (step S53: No), the processor 13 proceeds to the process of step S60.

Step S54: the processor 13 judges whether the time that the other moveable body 2 stays within a predetermined range from the moveable body 1 is 3 seconds or more, and the other moveable body 2 is still tailgating and following even after the moveable body 1 changes lanes. When judging that the time that the other moveable body 2 stays within a predetermined range from the moveable body 1 is 3 seconds or more, and the other moveable body 2 is still tailgating and following even after the moveable body 1 changes lanes (step S54: Yes), the processor 13 proceeds to the process of step S55. When not judging that the time that the other moveable body 2 stays within a predetermined range from the moveable body 1 is 3 seconds or more, and the other moveable body 2 is still tailgating and following even after the moveable body 1 changes lanes (step S54: No), the processor 13 proceeds to the process of step S60.

Step S55: the processor 13 judges whether a fifth aggressive judgment flag is in the "none" state, the "provisionally established" state, or the "established" state. When judging that the fifth aggressive judgment flag is in the "established" state (step S55: "established"), the processor 13 proceeds to the process of step S57. When judging that the fifth aggressive judgment flag is in the "provisionally established" state (step S55: "provisionally established"), the processor 13 proceeds to the process of step S56. When judging that the fifth aggressive judgment flag is in the "none" state (step S55: "none"), the processor 13 proceeds to the process of step S18.

Step S56: the processor 13 switches the fifth aggressive judgment flag from the "provisionally established" state to the "established" state.

Step S57: the processor 13 outputs information instructing to perform an action (second action) of the moveable body 1 via the communication interface 12 to the moveable body 1, thereby outputting an action instruction to avoid danger to the moveable body 1.

Step S58: the processor 13 switches the fifth aggressive judgment flag from the "none" state to the "provisionally established" state.

Step S59: the processor 13 outputs information instructing to perform an action (fifth action) of the moveable body 1 via the communication interface 12 to the moveable body 1, thereby outputting an action instruction to the moveable body 1.

Step S60: the processor 13 sets the fifth aggressive judgment flag to "none". In other words, the processor 13 presumes that the driver of the other moveable body 2 does not intend to drive aggressively and continues fully autonomous driving of the moveable body 1.

### [Sixth Aggressive Driving Judgment Process]

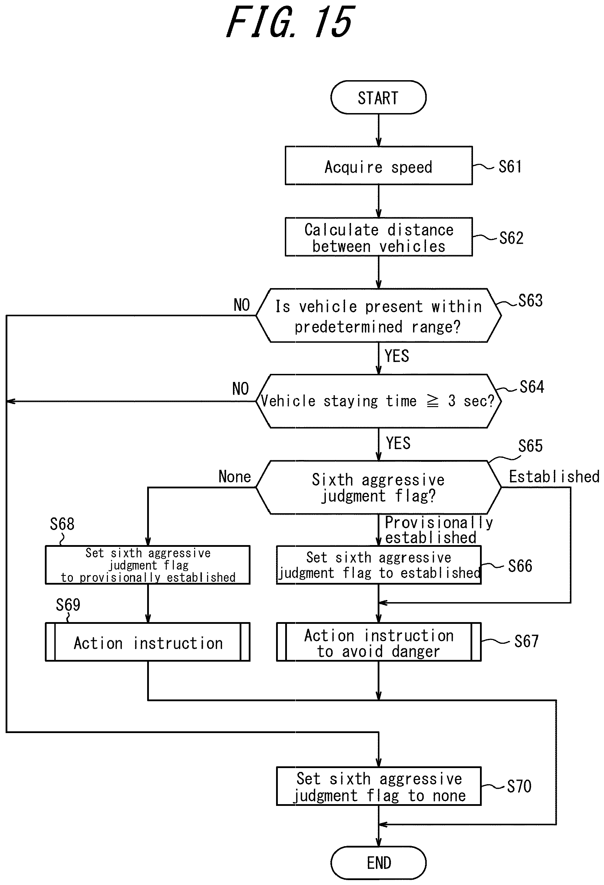

FIG. 15 is a flowchart illustrating an example of a sixth aggressive driving judgment process. The sixth aggressive driving judgment process is executed by the processor 13 mounted in the image processing apparatus 10.

Step S61: the processor 13 acquires the speed of the moveable body 1 from a vehicle speed sensor mounted in the moveable body 1.

Step S62: based on Table 3, the processor 13 calculates an appropriate distance between the moveable body 1 and the other moveable body 2. In other words, the processor 13 determines a safe distance and a dangerous distance between the moveable bodies in accordance with the speed of the moveable body 1.

Step S63: based on a surrounding image capturing the surroundings of the moveable body 1, the processor 13 judges whether another moveable body 2 is present within a predetermined range from the moveable body 1. When judging that another moveable body 2 is present within a predetermined range from the moveable body 1 (step S63: Yes), the processor 13 proceeds to the process of step S64. When judging that another moveable body 2 is not present within a predetermined range from the moveable body 1 (step S63: No), the processor 13 proceeds to the process of step S70.

Step S64: the processor 13 judges whether the time that the other moveable body 2 stays within a predetermined range from the moveable body 1 is 3 seconds or more. When judging that the vehicle staying time is 3 seconds or more (step S64: Yes), the processor 13 proceeds to the process of step S65. When judging that the vehicle staying time is shorter than 3 seconds (step S64: No), the processor 13 proceeds to the process of step S70.

Step S65: the processor 13 judges whether a sixth aggressive judgment flag is in the "none" state, the "provisionally established" state, or the "established" state. When judging that the sixth aggressive judgment flag is in the "established" state (step S65: "established"), the processor 13 proceeds to the process of step S67. When judging that the sixth aggressive judgment flag is in the "provisionally established" state (step S65: "provisionally established"), the processor 13 proceeds to the process of step S66. When judging that the sixth aggressive judgment flag is in the "none" state (step S65: "none"), the processor 13 proceeds to the process of step S68.

Step S66: the processor 13 switches the sixth aggressive judgment flag from the "provisionally established" state to the "established" state.

Step S67: the processor 13 outputs information instructing to perform an action (second action) of the moveable body 1 via the communication interface 12 to the moveable body 1, thereby outputting an action instruction to avoid danger to the moveable body 1.

Step S68: the processor 13 switches the sixth aggressive judgment flag from the "none" state to the "provisionally established" state.

Step S69: the processor 13 outputs information instructing to perform an action (sixth action) of the moveable body 1 via the communication interface 12 to the moveable body 1, thereby outputting an action instruction to the moveable body 1.

Step S70: the processor 13 sets the sixth aggressive judgment flag to "none". In other words, the processor 13 presumes that the driver of the other moveable body 2 does not intend to drive aggressively and continues fully autonomous driving of the moveable body 1.

In this way, according to the image processing method of the present embodiment, the judgment of whether another moveable body 2 is driving aggressively with respect to the moveable body 1 is not made based only on the first state of the other moveable body 2. Rather, the judgment of whether another moveable body 2 is driving aggressively with respect to the moveable body 1 is made taking into consideration the second state of the other moveable body 2 after a first action of the moveable body 1. In this way, misjudgment of aggressive driving can be suppressed, and the probability of a useless conflict occurring between the moveable body 1 and the other moveable body 2 can be reduced, thereby facilitating traffic.

### <Modification>

In the present embodiment, examples of the first action of the moveable body 1 include traveling at the legal speed limit, changing lanes, honking the horn to alert the other moveable body, evacuating to the nearest convenience store, evacuating to the nearest service area or parking area, and the like, but these examples are not limiting. The first action of the moveable body 1 may be an action appropriately combining these operations. When the moveable body 1 includes an audio output function, the first action of the moveable body 1 may include audio output. When the moveable body 1 includes a function for projection on the ground or the like, the first action of the moveable body 1 may include projection of a predetermined image, such as a message, on the sidewalk or the like.

In the present embodiment, examples of the second action of the moveable body 1 include notifying the police, stopping, decelerating, evacuating to the nearest convenience store, evacuating to the nearest service area or parking area, recording on a drive recorder, uploading surrounding images to a predetermined network, displaying that the other moveable body is driving recklessly, and the like, but these examples are not limiting. When the moveable body 1 includes an audio output function, the second action of the moveable body 1 may include audio output. When the moveable body 1 includes a function for projection on the ground or the like, the second action of the moveable body 1 may include projection of a predetermined image, such as a message, on the sidewalk or the like.

In the present embodiment, examples of the third action of the moveable body 1 include notifying the police, stopping, evacuating to the nearest convenience store, evacuating to the nearest service area or parking area, locking the doors after stopping, and the like, these examples are not limiting. When the moveable body 1 includes an audio output function, the third action of the moveable body 1 may include audio output. When the moveable body 1 includes a function for projection on the ground or the like, the third action of the moveable body 1 may include projection of a predetermined image, such as a message, on the sidewalk or the like.

For example, the processor 13 may sequentially perform operations to avoid the state of the other moveable body 2, such as decelerating and continuing to travel at the edge of the traffic lane, gradually moving away from the traffic lane, stopping on the shoulder of the road, and the like. At each operation, the processor 13 may judge whether the other moveable body 2 is driving recklessly. For example, when the other moveable body 2 does not stop driving recklessly despite repetition of the first action, the second action, and the third action a predetermined number of times, the processor 13 may disengage the fully autonomous driving of the moveable body 1.

In the example described in the present embodiment, the image processing apparatus 10 mounted in the moveable body 1 performs operations such as detecting the first state, the second state, and the third state of the other moveable body 2 from a surrounding image, determining the first action based on the first state of the other moveable body 2, determining the second action based on the second state of the other moveable body 2, determining the third action based on the third state of the other moveable body 2, and the like, but these examples are not limiting. For example, a server or the like on a network may include the functions with which the processor 13 is mainly provided, such as detecting the first state, the second state, and the third state of the other moveable body 2 from a surrounding image, determining the first action based on the first state of the other moveable body 2, determining the second action based on the second state of the other moveable body 2, determining the third action based on the third state of the other moveable body 2, and the like. In this case, the moveable body 1 is capable of communicating with the server over the network and transmits the surrounding image from the moveable body 1 to the server. The server performs operations such as detecting the first state, the second state, and the third state of the other moveable body 2 from the surrounding image acquired from the moveable body 1, determining the first action based on the first state of the other moveable body 2, determining the second action based on the second state of the other moveable body 2, determining the third action based on the third state of the other moveable body 2, and the like, and transmits information instructing to perform the determined action to the moveable body 1 via the network.

In the present embodiment, an example of the aggressive judgment state flag having the three states of "none", "provisionally established", and "established" has been described, but the aggressive judgment state flag is not limited to this example. In the present embodiment, an example of performing the aggressive driving judgment process using the aggressive judgment state flag has been described, but a widely-known algorithm can be used to perform the aggressive driving judgment process.

In the present embodiment, an example of the processor detecting the state of the other moveable body 2 based on a surrounding image captured by the imaging unit 11 has been described, but this example is not limiting. The processor may detect the state of the other moveable body 2 based on various types of sensors mounted in the moveable body 1. For example, the processor may detect the distance between the moveable body 1 and the other moveable body 2 using a ranging sensor mounted in the moveable body 1. For example, the processor may use an illuminance sensor mounted in the moveable body 1 to detect that the other moveable body 2 is blinking its headlights.

The references to "first", "second", "third", "fourth", "fifth", "sixth", and the like in the present embodiment are identifiers for distinguishing between elements. The numbers attached to elements distinguished by references to "first", "second", and the like in the present disclosure may be switched. For example, the identifiers "first" and "second" of the first aggressive driving and the second aggressive driving may be switched. The identifiers "second" and "third" of the second aggressive driving and the third aggressive driving may be switched. The identifiers "third" and "fourth" of the third aggressive driving and the fourth aggressive driving may be switched. The identifiers "fourth" and "fifth" of the fourth aggressive driving and the fifth aggressive driving may be switched. The identifiers "fifth" and "sixth" of the fifth aggressive driving and the sixth aggressive driving may be switched. Identifiers are switched simultaneously, and the elements are still distinguished between after identifiers are switched. The identifiers may be removed. Elements from which the identifiers are removed are distinguished by their reference sign. Identifiers in the present disclosure, such as "first", "second", "third", "fourth", "fifth", and "sixth", may not be used in isolation as an interpretation of the order of elements or as the basis for the existence of the identifier with a lower number.

Although embodiments of the present disclosure have been described on the basis of drawings and examples, it is to be noted that various changes and modifications will be apparent to those skilled in the art based on the present disclosure. Therefore, such changes and modifications are to be understood as included within the scope of the present disclosure.

### REFERENCE SIGNS LIST

- 1: Moveable body
- 1A: Imaging apparatus
- 2: Other moveable body
- 10: Image processing apparatus
- 11: Imaging unit (input interface)
- 12: Communication interface (output interface)
- 13: Processor
- 14: Storage

## Claims

1. An image processing apparatus comprising:
a processor configured to perform an action determination process to detect a state of another moveable body from a surrounding image capturing surroundings of a moveable body and determine an action of the moveable body based on the detected state of the another moveable body; and
an output interface configured to output to the moveable body instructions to perform the action of the moveable body determined by the processor;
wherein as the action determination process, the processor is configured to
determine a first action of the moveable body based on a first state of the another moveable body detected from the surrounding image,
output instructions to perform the determined first action to the moveable body via the output interface, and
determine a second action of the moveable body when determining that the another moveable body is driving recklessly based on a second state of the another moveable body detected from a surrounding image captured after the first action by the moveable body.

2. The image processing apparatus of claim 1, wherein the first state of the another moveable body includes one of a state of the another moveable body closing a distance from the moveable body, a state of the another moveable body zig-zagging behind the moveable body, a state of the another moveable body flashing headlights behind the moveable body, a state of the another moveable body tailgating or following the moveable body, or a state of the another moveable body approaching the moveable body from a side.

3. The image processing apparatus of claim 1, wherein
the moveable body further comprises a microphone, and
as the action determination process, the processor is configured to
determine a first action of the moveable body based on a state, detected from the microphone and the surrounding image, of the another moveable body using a horn to intimidate the moveable body,
output instructions to perform the determined first action to the moveable body via the output interface, and
determine a second action of the moveable body when determining that the another moveable body is driving recklessly based on continuation or repetition of the state, detected from the microphone and a surrounding image captured after the first action by the moveable body, of the another moveable body using the horn to intimidate the moveable body.

4. The image processing apparatus of claim 1 or 2, wherein the second state of the another moveable body includes one of continuation of the first state or repetition of the first state.

5. The image processing apparatus of any one of claims 1 to 4, wherein the first action of the moveable body includes one of continuing to travel at a legal speed limit, changing lanes, honking a horn, or evacuating to an evacuation location.

6. The image processing apparatus of any one of claims 1 to 5, wherein the second action of the moveable body includes one of notifying police, stopping, decelerating, evacuating to an evacuation location, recording on a drive recorder, uploading the surrounding image to a predetermined network, and displaying that the another moveable body is driving recklessly.

7. The image processing apparatus of any one of claims 1 to 6, wherein the processor is configured to determine a third action of the moveable body when determining that the another moveable body is driving recklessly based on a third state of the another moveable body detected from a surrounding image captured after the second action by the moveable body.

8. The image processing apparatus of claim 7, wherein the third state of the another moveable body includes one of continuation of the first state or repetition of the first state.

9. The image processing apparatus of claim 7 or 8, wherein the third action of the moveable body includes one of notifying police, stopping, evacuating to an evacuation location, or locking doors after stopping.

10. The image processing apparatus of any one of claims 1 to 9, wherein the moveable body further comprises one of a vehicle speed sensor, a ranging sensor, a microphone, radar, sonar, or lidar.

11. An imaging apparatus comprising:
the image processing apparatus of any one of claims 1 to 10; and
an input interface configured to acquire the surrounding image.

12. A moveable body comprising the imaging apparatus of claim 11.

13. An image processing method comprising:
detecting, by an image processing apparatus, a state of another moveable body from a surrounding image capturing surroundings of a moveable body and determining a first action of the moveable body based on a first state of the another moveable body;
outputting, by the image processing apparatus, instructions to perform the determined first action to the moveable body; and
determining, by the image processing apparatus, a second action of the moveable body in response to determining that the another moveable body is driving recklessly based on a second state of the another moveable body detected from a surrounding image captured after the first action by the moveable body.
